# EUROPEAN PATENT APPLICATION

(11) **EP 1 995 421 A1**
(43) Date of publication of application: **26.11.2008**
(21) Application number: 08008532.7
(22) Date of filing: 06.05.2008
(51) Int. Cl.: F01N 3/20

(54) **Substance dispenser for treating exhaust gas and method**

(30) Priority: 24.05.2007 US 753196
(71) Applicant: International Engine Intellectual Property Company, LLC., Warrenville, IL 60555 (US)
(72) Inventor: Hill, Joseph D., Rochelle IL 61068 (US); Pellico, Christopher J., Darien IL 60561 (US)
(74) Representative: Kuhnen & Wacker

(57) **Abstract**

A reservoir (120) for storing an additive solution includes a reservoir volume (128) formed internally to the reservoir (120). The reservoir volume (128) is arranged to sealably store the additive solution. An inlet passage (122) is in fluid communication with the reservoir volume (128). A canister (140) is disposed on the reservoir (120). The canister (120, 300) includes a cup portion (308) that forms an internal volume having a permeable portion (314), and a head portion (316) connected to the cup portion (308). A plurality of pellets (310) is disposed in the internal volume of the cup portion (308) of the canister, such that a fluid (306) contained in the reservoir volume (304) is in fluid communication with the plurality of pellets (310) through the permeable portion (308) of the canister.

## Description

### Field of the Invention

This invention relates to internal combustion engines, including but not limited to substance dispensers for procuring and dispensing substances used to treat exhaust gas generated by an internal combustion engine.

### Background of the Invention

Internal combustion engines generate exhaust gases during operation. These exhaust gases are typically treated and purified using various known methods. One known method of treating engine exhaust gas is by use of additives or chemical compounds that are introduced into an exhaust gas stream, downstream of an engine and upstream of an exhaust gas treating device, such as an oxidation catalyst or a particulate filter. One known chemical substance that may be used to activate the oxidation catalyst, or to lower the regeneration temperature of a particulate filter, is a solution of urea, water, and monohydric or polyhydric alcohol.

In a vehicle having a urea solution dispensing device, a separate tank containing the urea solution is installed onto the vehicle. A dispenser meters a required amount of the urea solution to be dispensed based on an operating condition of the engine in the vehicle, and an injector device injects the required amount of urea into an exhaust pipe of the vehicle at a location upstream of a treatment device. The amount of urea contained in the tank is finite and less than a total amount that the vehicle will require through the vehicle's service life. This necessitates a periodic replenishment of the urea solution in the tank.

One known method of replenishing a urea solution supply for a vehicle, for example, can be found in United States Patent No. 6,263,924, issued on July 24, 2001 to Grosser (the '924 patent). The '924 patent describes a dispensing system for a fuel additive that is mixed with the fuel while the fuel is added to a vehicle's fuel tank. Another example of a dispenser for an additive that is mixed with the fuel, or injected into an exhaust stream of a vehicle can be found in United States Patent No. 7,150,145, issued on December 19, 2006 to Patchett et al. (the '145 patent). The '145 patent describes an SCR system for a vehicle which uses an external reducing reagent to convert NOx emissions in a manner which accounts for transient emissions that is correlated to the storage capacity of the reducing agent.

Both of the aforementioned systems, and all such systems in general, depend on the availability of a urea solution to a vehicle operator when replenishment is necessary. Currently, an infrastructure for urea availability is unavailable, or available to a very limited extent.

### Summary of the Invention

A reservoir for storing an additive solution includes a reservoir volume formed internally to the reservoir. The reservoir volume is arranged to sealably store the additive solution. An inlet passage is in fluid communication with the reservoir volume. A canister is disposed on the reservoir. The canister includes a cup portion that forms an internal volume having a permeable portion, and a head portion connected to the cup portion. A plurality of pellets is disposed in the internal volume of the cup portion of the canister, such that a fluid contained in the reservoir volume is in fluid communication with the plurality of pellets through the permeable portion of the canister. Dissolution of the pellets in the fluid advantageously yields the additive solution.

### Brief Description of the Drawings

FIG. 1 is a block diagram of a vehicle having a substance dispenser system in accordance with the invention.

FIG. 2 is a partial cutaway view of one embodiment for a substance containing canister in accordance with the invention.

FIG. 3 is a partial cross section of a reservoir containing an additive solution and having another embodiment of a canister containing an additive in solid form, in accordance with the invention.

FIG. 4 is a flowchart for a method of dispensing an additive solution in accordance with the invention.

### Description of a Preferred Embodiment

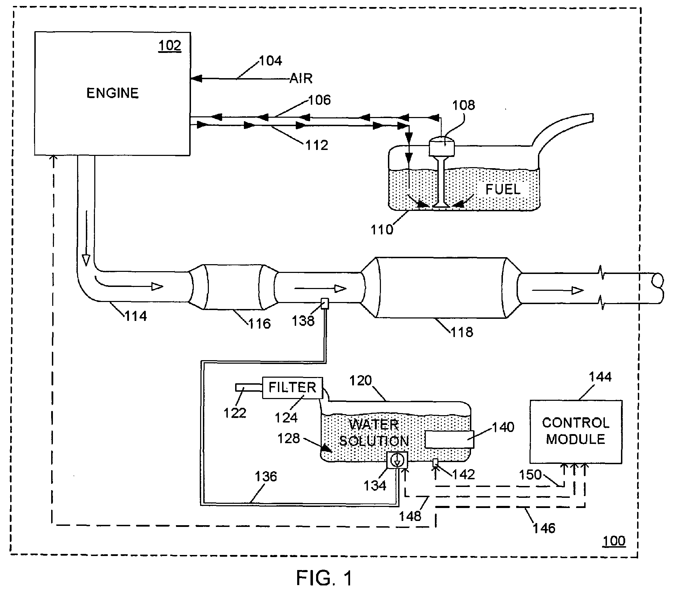

The following describes an apparatus for and method of providing an easily replenishable supply of an additive for use with exhaust gas after-treatment components on a vehicle with an internal combustion engine. A block diagram of a system for storing and dispensing an additive for treating exhaust gas in a vehicle 100 is shown in FIG. 1. The vehicle 100 includes an engine 102 operably associated therewith. The engine 102 admits air through an air inlet passage 104, and fuel, through a fuel inlet passage 106, during operation. Fuel in the fuel inlet passage 106 is pushed into the engine 102 by a fuel pump 108, as is known. The fuel pump 108 is associated with a fuel tank 110 that is mounted onto the vehicle 100 and that contains a replenishable supply of liquid fuel. Unused fuel returns to the fuel tank 110 from the engine 102 via a fuel return passage 112.

At times when the engine 102 operates, fuel from the fuel supply passage 106 is mixed with air from the air inlet passage 104 in a plurality of cylinders (not shown) for combustion. The combustion of the fuel and air mixture yields power that is mechanically transferred to the vehicle. Exhaust gas generated by the combustion in the cylinders is collected and expelled from the engine 102 through an exhaust pipe 114. The open-headed arrows in FIG. 1 denote the flow of exhaust gas.

The exhaust pipe 114 contains devices that treat and clean constituents of the exhaust gas emitted by the engine 102 during operation. These devices may include a pre-catalyst 116, a catalyst 118, a filter (not shown), a muffler (not shown), and so forth. These devices 116 and 118 may catalyze the exhaust gas to remove various compounds, such as hydrocarbons, nitrous and nitric oxides, and so forth, as is known. An effectiveness and efficiency of operation of devices that treat exhaust gas may be augmented by use of additives, such as chemical solutions containing urea and other chemicals, as is also known.

The vehicle 100 advantageously has an easily replenishable supply device that injects an additive compound into the exhaust pipe 114. As part of the additive supply device, the vehicle 100 includes a tank or reservoir 120 connected thereto. The reservoir 120 has an inlet opening or neck 122 that can be sealed with a cap (not shown) and is easily accessible to an operator. For example, the neck 122 may be located adjacent to a fuel fill port of the vehicle. The tank 120 includes a deionization filter 124 disposed in line with the neck 122 that is arranged to de-ionize and filter a liquid, such as water, that fills the tank 120 through the neck 122.

**A** doser device 134 is disposed on the tank 120 and is in fluid communication with an interior volume 128, and a conduit 136 that connects the doser device 134 with an additive nozzle 138 that is disposed in the exhaust pipe 114 between the pre-catalyst 116 and the catalyst 118.

The doser device 134 is advantageously capable of admitting a controlled and determinable quantity of fluid from the interior volume 128, and then pumping the fluid through the conduit 136 to be injected into the exhaust pipe 114 through the additive nozzle 138. The tank 120 also includes an additive canister 140 and an additive concentration sensor 142 disposed therein. A control module 144 is operably associated with various components, as denoted by double-headed-dashed-line arrows. An engine communication channel 146 connects the module 144 with various engine components, for example, exhaust gas temperature and/or pressure sensors, and so forth. A doser communication channel 148 connects the module 144 with the doser 134. An additive quality sensor communication channel 150 connects the module 144 with the additive concentration sensor 142, and so forth. Other components, such as a temperature sensor, heater, and so forth, may be associated with the tank 120.

During operation, the concentration sensor 142 senses a concentration of the additive solution in the tank 120, a solution that is created through dilution of additive from the additive canister 140 into water present in the tank 120, and relays the concentration measured to the control module 144 through the additive quality sensor communication channel 150. The control module 144 uses the concentration information of the solution in the tank 120, along with engine operating parameters that are received by the control module 144 through the engine communication channel, and at appropriate times initiates a solution injection into the exhaust pipe 114.

When an injection event is initiated, certain parameters are pertinent to proper operation of the system. One such parameter is the desired amount of additive that the control module 144 determines is required for the injection event. The control module 144 determines a proper amount of solution to be passed to the injector 138 based on a concentration of the solution in the tank 120 that will yield a desired net amount of additive. Once the appropriate determination has been made, the control module 144 sends a command to the doser device 134 to pump to the injector 138 an appropriate amount or volume of solution. The doser device 134 pumps the appropriate amount of solution to the injector 138, which in turn injects same into the exhaust pipe 114. This cycle may repeat as necessary, until a time when the solution in the tank 120 begins to deplete. At that time, a replenishment of the solution in the tank 120 becomes necessary.

When replenishing the solution in the tank 120, an operator simply and advantageously adds water into the tank 120 through the neck 122. In contrast to known methods of replenishing a solution of urea into a tank of a vehicle, in accordance with this embodiment, the operator may add a solution of urea, if such a solution is available, or may alternatively simply add water. The water added into the tank 120 to fill the tank 120 comes in contact with the additive canister 140.

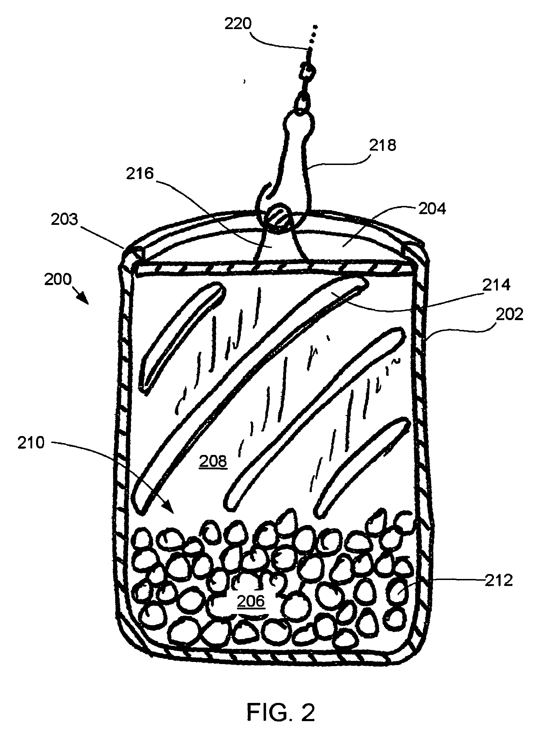

A partial cross section view of one embodiment for a canister 200 in accordance with the invention is shown in FIG. 2. The canister 200 may be made by any known method. In the embodiment shown, the canister 200 includes a cup portion 202 that is crimped along a periphery 203 of an open end thereof with a cover portion 204. The canister 200 has a substantially cylindrical shape, even though as would be obvious to one skilled in the art any shape for a canister would be effective. The cup portion 202 forms a lateral wall and a bottom that enclose an internal volume that comprises a closed portion 206 and a permeable portion 208. The closed portion 206 encompasses a plurality 210 of pellets 212. Each pellet 212 is made by compacting an additive, in a powder form, with a binder substance that is water-soluble in a predictable fashion.

The permeable portion 208 includes a plurality of openings 214 that are formed in and through the material of the cup portion 202. In the embodiment shown the openings 214 are elongates slots, but any other type and shape of opening will be effective, for example, holes, or a grid, and so forth. The openings 214 are large enough to allow for water to pass into and out of the permeable portion 208 when the canister 200 is immersed in water. The openings 214 are advantageously small enough not to allow any of the pellets 212 to fall out of the canister 200 when the pellets are large enough to block any of the passages in the doser 134, the conduit 136, or the injector 138, seen in FIG. 1. The cover portion 204 may include optional features allowing connection of the canister for installation or suspension into a tank. In the embodiment shown, the cover portion 204 includes a loop feature 216 that can be used to support the canister 200 from a hook 218 that is connected to a chain 220. Other mounting or suspension configurations that will allow the canister 200, or any similar canister, to be suspended into, or attached onto, a tank such that the canister 200 can come into contact with water contained in the tank can be used.

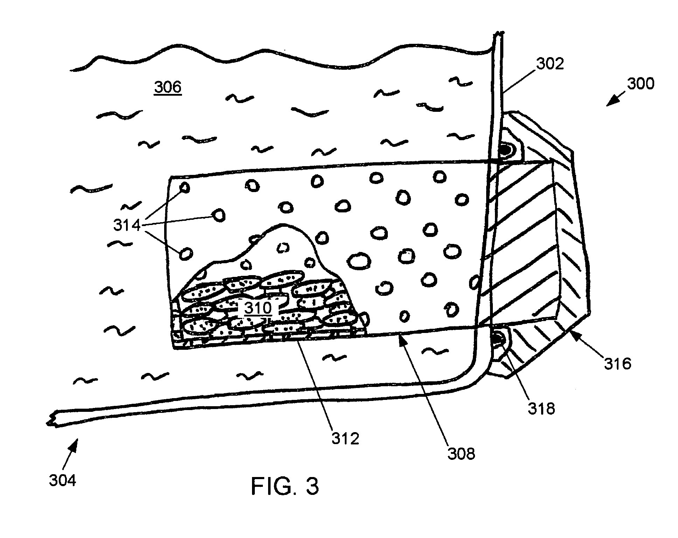

An alternate embodiment of a canister 300, shown in partial cross-section as installed onto a wall 302 of a tank 304, is shown in FIG. 3. The tank 304 contains a quantity of solution 306. The canister 300 is installed in a horizontal direction in this embodiment, and is sealably connected to the wall 302 of the tank 304 such that a cup portion 308 containing a plurality of additive pellets 310 is immersed in the solution 306. The plurality of additive pellets 310 may settle toward a bottom wall of the cup portion 308, or may alternatively have a neutral buoyancy with respect to he solution and be suspended in the cup portion 308. Alternatively, the plurality of pellets 310 may "float" toward a top portion of the cup portion 308. A relative buoyancy of the pellets may be determined, as is known, by a relative density of each pellet to the density of the additive solution. A wall 312 of the cup portion 308 has a plurality of openings 314 formed therein that allow the solution 306 to pass into the canister 300, over the plurality of pellets 310, and back out of the canister 300 into the tank 304. The canister 300 may be connected to the wall 302 of the tank 304 with a cap 316 having a seal 318 that sealably engages the wall 302. The cap 316 is advantageously removable to allow for replacement of the canister 300 at times when the plurality of pellets 310 contained therein has been depleted.

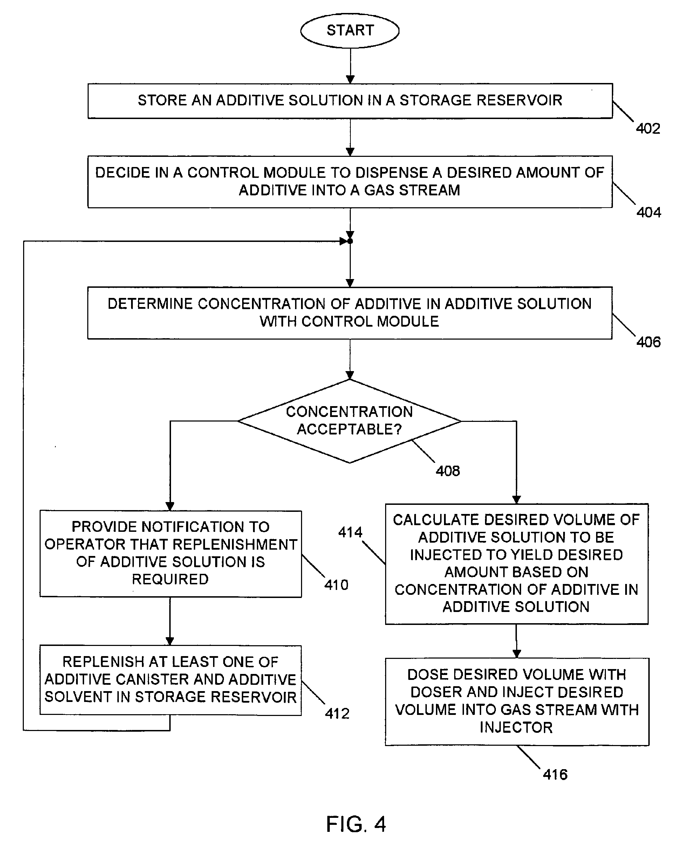

A flowchart for a method of providing an additive to a device disposed within an exhaust stream for exhaust gases containing combustion byproducts is shown in FIG. 4. As it can be appreciated by one having ordinary skill in the art, this method is applicable to any operation of gas purification by use of additives and is not limited to purification of exhaust gases emanating from an internal combustion engine installed in a vehicle.

An additive solution is stored in a storage reservoir in step 402. The additive solution is an aqueous solution of urea that is yielded when solid urea-containing pellets, palletized with a binder material and contained in a canister connected to the storage reservoir, are exposed to water added to the reservoir. The binder material that binds the pellets is advantageously capable of providing an aqueous solution of urea that saturates within a relatively narrow range of percent (%) concentrations of urea, independently of a temperature of the water, the reservoir, or ambient temperature. At times when an engine operates and a control module decides that at least one after-treatment component requires regeneration, the control module decides to dispense a desired amount of additive into a gas stream at step 404.

In conducting the decision to dispense the desired amount of additive into a gas stream of step 404, the control module first senses or calculates a concentration of additive in the additive solution at step 406. The sensing or calculation of additive concentration in the additive solution may be accomplished by a modeling calculation that is based on the original amount of solvent added to the reservoir, or the amount of solution historically dispensed from the last replenishment thereof, or more directly, by use of a concentration sensor disposed in the reservoir that operably communicates with the control module. In a preferred embodiment, a concentration sensor is used to sense the concentration of additive in the additive solution in the reservoir. The concentration sensor yields a concentration reading, which is communicated to the control module. The concentration reading is used by the control module to calculate a desired volume of solution to be dispensed to yield the desired amount of additive, based on concentration. Use of the concentration sensor may also advantageously be made to determine, at step 408, whether the additive solution contained in the reservoir has a concentration that is within an acceptable range, for example, a range between 1 and 4 percent.

At times when the concentration of additive in the additive solution is deemed to be outside of the acceptable range, for example, if the concentration is below 1% or above 4% by weight, then a negative decision from the determination step 408 will cause the control module to provide a notification to an operator of the vehicle that replenishment of additive solution is required at step 410. This notification may be conducted by any mode known, for example, an illumination of an indicator lamp on a dashboard of the vehicle, an appropriate message to a vehicle's message display, and so forth.

At times when replenishment of the additive solution is required, an operator refills or replenishes the solvent, or water, in the storage reservoir, and some of the times, the operator might also replace an additive canister containing additive in solid form, at step 412.

At times when the determination is made in the decision step 408 that the concentration of the additive in the additive solution is acceptable, a desired volume of additive solution to be injected that will yield the desired amount of additive based on the concentration of the additive in the additive solution is calculated in the control module at step 414. The calculation of step 414 may fundamentally be the ratio between the desired amount or mass of additive, divided by the density of the additive in the additive solution, to yield a volume of additive solution that contains the desired amount of additive.

After the desired volume of additive solution has been determined, the control module may instruct a doser to dispense the desired amount of additive solution from the reservoir, and inject the desired amount of the additive solution into a passage leading to an injector that will finally dispose of the solution in the exhaust gas stream, at step 416. The doser may be an electronically controlled fluid pump capable of dispensing known volumes of fluids. The doser, for example may be a reciprocating piston pump driven by a step motor that is able to dispense incrementally known volumes of fluid with each action of the piston. Alternatively, the doser may be a vane pump that has a fluid flow-meter operably associated therewith that is able to measure a volume of fluid being pumped therethrough.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A reservoir for storing an additive solution, the reservoir comprising:
a reservoir volume formed internally to the reservoir, wherein the reservoir volume is arranged to sealably store an additive solution;
an inlet passage in fluid communication with the reservoir volume;
a canister disposed on the reservoir, wherein the canister comprises:
a cup portion that forms an internal volume, the internal volume comprising a permeable portion, and
a head portion connected to the cup portion;
a plurality of pellets disposed in the canister, wherein the plurality of pellets is disposed in the internal volume of the cup portion of the canister;
wherein a fluid contained in the reservoir volume is in fluid communication with the plurality of pellets through the permeable portion of the canister.

2. The reservoir of claim 1, wherein the fluid contained in the reservoir volume is an aqueous solution containing urea.

3. The reservoir of claim 1, wherein the plurality of pellets contain urea in a solid form, and a binder that is water soluble.

4. The reservoir of claim 1, wherein the canister is at least partially disposed within the reservoir volume, and wherein the permeable portion of the canister is submerged in the fluid contained in the reservoir volume.

5. The reservoir of claim 1, further comprising a doser operably connected to the reservoir, wherein the doser is in fluid communication with the reservoir volume and capable of admitting at least some of the fluid contained therein.

6. The reservoir of claim 1, further comprising a concentration sensor disposed in fluid communication with the reservoir volume, wherein the concentration sensor is capable of sensing a concentration of additive in the fluid.

7. The reservoir of claim 1, further comprising a fluid heater disposed in fluid communication with the reservoir volume.

8. A vehicle having an internal combustion engine associated therewith, the internal combustion engine having an exhaust port connected to an exhaust pipe, the exhaust pipe mounted to the vehicle and containing at least one after-treatment device, the vehicle comprising:
a storage reservoir for an additive solution, the storage reservoir comprising:
an internal reservoir volume arranged to retain a quantity of the additive solution,
a canister containing an amount of an additive in solid form,
an inlet passage containing a filter, the inlet passage being in fluid communication with the reservoir volume and arranged for providing a filling passage for adding a liquid to the reservoir volume,
a concentration sensor arranged to sense an additive concentration of the additive solution, and
a doser operably associated with the storage reservoir and arranged to admit a predetermined portion of the additive solution;
a conduit fluidly connecting the doser with an injector, wherein the injector is operably associated with the exhaust pipe, wherein the injector is disposed upstream of the at least one after-treatment device; and
a control module operably associated with the internal combustion engine, the concentration sensor, and the doser.

9. The vehicle of claim 8, wherein the canister comprises a permeable portion, and wherein the additive in solid form fluidly communicates with the additive solution through the permeable portion.

10. The vehicle of claim 8, wherein the permeable portion comprises a lateral wall enclosing an internal canister volume, wherein the additive in solid form is disposed in the internal canister volume, and wherein the lateral wall forms a plurality of openings that fluidly connect the internal canister volume with the internal reservoir volume.

11. The vehicle of claim 8, wherein the canister comprises a head that sealably connects to an external wall of the reservoir, wherein the canister is insertable into the reservoir volume through an opening formed in the external wall of the reservoir.

12. A method for providing an additive to an injection device disposed within an exhaust stream, comprising the steps of:
storing an additive solution in a storage reservoir;
deciding in a control module to dispense a desired amount of the additive into the exhaust stream;
determining a concentration of the additive in the additive solution with the control module;
at times when the concentration of the additive in the additive solution is within an acceptable range, calculating a desired volume of the additive solution to be injected based the concentration of the additive in the additive solution;
dosing the desired volume with a doser; and
injecting the desired volume of the additive solution into the exhaust stream with the injection device.

13. The method of claim 12, wherein the determination step is accomplished by a modeling calculation that is based on an original amount of a solvent added to the storage reservoir minus a used amount of additive solution dispensed since a time of last replenishment.

14. The method of claim 12, wherein the determination step is accomplished by a measurement of the concentration with a concentration sensor, and wherein the method further comprises the step of communicating an output of the sensor to the control module.

15. The method of claim 12, further comprising the step of providing a notification to an operator that replenishment of the storage reservoir is required at times when a determination is made at the determination step that the concentration of the additive in the additive solution is outside of the acceptable range.

16. The method of claim 15, further comprising the step of replacing an additive-containing canister that is associated with the storage reservoir.

17. The method of claim 15, further comprising the step of adding an amount of solvent into the storage reservoir.

18. The method of claim 12, wherein the calculation step is essentially accomplished in the control module by dividing a desired mass of additive by the determined concentration of the additive solution.

19. The method of claim 12, further comprising the step of measuring a flow rate of additive solution through the doser.
